# EUROPEAN PATENT APPLICATION

(11) **EP 1 568 582 A2**
(43) Date of publication of application: **31.08.2005**
(21) Application number: 05003974.2
(22) Date of filing: 24.02.2005
(51) Int. Cl.: B62D 65/02

(54) **Workstation for assembling workpieces in an automotive assembly line**

(30) Priority: 26.02.2004 US 548129 P; 13.10.2004 US 618422 P; 04.02.2005 US 52487
(71) Applicant: Progressive Tool & Industries, Co., Southfield, MI 48034 (US)
(72) Inventor: Kilibarda, Velibor, Birmingham MI 48009 (US)
(74) Representative: Notaro, Giancarlo

(57) **Abstract**

A workstation and method for processing a plurality of workpieces (12a) includes at least one material handling robot (14a) movable along a processing path (16a) for supporting a workpiece (12a) to be moved along the processing path (16a). At least one station can be defined by at least one processing position adjacent the processing path (16a) for receiving workpieces (12b) to be processed when delivered and positioned by the at least one material handling robot (20a-d). Interchangeable end effecters (22) can be connected to the material handling robot (14a) for holding and supporting different configurations of workpieces. The material handling robot (14a) can disengage from the end effecter (22) at the processing position, to allow engagement with a processing tool for performing additional processing operations on the workpiece. A flexible body workstation for assembling workpieces can use multiple robots and/or multiple fixtures for processing different workpiece configurations in any sequential order along two processing paths.
In particular, a welding workstation for automotive assembly lines is provided.

## Description

### RELATED APPLICATIONS

The present application claims the benefit of provisional application serial number 60/548,129 filed on February 26, 2004 and serial number 60/618,422 filed on October 13, 2004.

### FIELD OF THE INVENTION

The present invention relates to a flexible body workstation for assembling workpieces using multiple robots and multiple fixtures, and more specifically, the present invention provides welding workstations for automotive assembly lines having multiple independently working welding robots and multiple fixtures for holding workpieces.

### BACKGROUND OF THE INVENTION

The efficiency of a welding workstation can be defined by the amount of time, normally a percentage, that a welding robot spends welding compared to the total time required for a particular repetitive cycle. The efficiency of the workstation relates to the amount of time that a welding robot takes to perform various welding operations compared to the total amount of time that the welding robot requires for a particular repetitive cycle. Idle time for a welding robot can occur when a new workpiece is loaded and prepared in a fixture. If the workstation has one welding robot and one fixture, the welding robot will stand idle as a completed part is unloaded from the fixture and a new workpiece is loaded onto the fixture. In the prior art, this problem was addressed by adding a second fixture at the workstation within reach of a single welding robot. In a workstation with two fixtures, the welding robot can complete welding operations at one fixture while workpieces are being loaded and unloaded at the second fixture. When the welding process is complete at the first fixture, the welding robot can move to the second fixture and immediately commence welding.

The amount of time that a workpiece is positioned in a fixture while work is being performed compared to the total amount of time that a workpiece is positioned in a fixture corresponds to workpiece efficiency. The amount of time that a workpiece sits idle in a fixture reduces the overall operating capacity of the workstation by reducing throughput, normally reported in parts per hour or similar units for the overall assembly process. In a workstation having one fixture and one welding robot, the amount of time that a workpiece sits idle in the fixture is minimized because the welding robot immediately commences welding operations as soon as a workpiece is loaded and any other setup procedures are completed. However, in a workstation that has two fixtures and one welding robot, a workpiece is loaded onto one fixture, is setup, and then sits idle until the welding robot completes welding operations at the second fixture. Therefore, in a workstation having one fixture and one welding robot, the workpiece efficiency is maximized while in a workstation having two fixtures and one welding robot the welding efficiency is maximized. It is desirable to provide a workstation wherein the welding efficiency and the workpiece efficiency are both enhanced.

### SUMMARY OF THE INVENTION

The present invention can include a single or a plurality of similar workstations positioned in sequence along an assembly line. A movable material handling transportation or transfer robot can be located in between adjacent workstations for moving workpieces from one workstation to the next. The present invention can also include a robot for processing the workpieces while held by the material handling transfer robot in between the adjacent workstations.

The present invention includes a flexible body shop for assembling workpieces using a single or multiple robots and a single or multiple fixtures. The present invention includes movable material handling robots, and stationary material processing robots in combination at the flexible body workstation. The workstation can perform processing operations on multiple workpieces sequentially, and performs different processing operations through the workstation simultaneously. The material processing robots performing processing operations on the workpieces can be located adjacent the at least one processing path, or in between first and second processing paths and are independently movable relative to each other. The workpiece fixtures can be provided in the form of interchangeable end effecters connectible to the at least one material handling robot for holding and supporting different workpiece configurations by exchanging one interchangeable end effecter configuration for a different interchangeable end effecter workpiece configuration. The interchangeable end effecters can be geometry fixtures for different workpiece configurations to allow processing different workpiece configurations in any desired sequence by changing end effecters automatically to correspond to the next workpiece configuration to be processed.

The present invention can include a plurality of similar workstations positioned in sequence along an assembly line. The at least one material handling robot can hand off a workpiece from a transfer position at one end of the processing path to another material handling robot for movement along another processing path for moving workpieces from one workstation to the next and/or can position a workpiece at multiple workstations before transfer. The present invention can also include a material processing robot for processing the workpiece while being held by the material handling robot at the transfer position in between adjacent workstations.

The present invention can provide an electronic control means for coordinating the movement of the material handling robots and/or the material processing robots. The electronic control means can be programmable for processing any mix of workpieces of different configurations in any sequential order. The electronic control means can present the appropriate interchangeable end effecter for connection to a material handling robot in order to move the workpiece along a corresponding processing path to a processing position adjacent the processing path for interaction with the material processing robot or robots located at the processing position. The electronic control means can signal each material handling robot when an exchange of interchangeable end effecters is necessary in order to process a different workpiece configuration during the next cycle of movement along the processing path. The material processing robot can be controlled with different programmable sequences for the various workpiece configurations to be processed in order to perform the necessary processing operations, by way of example and not limitation such as welding, in an efficient manner for the particular workpiece configuration being processed.

Other objects, advantages and applications of the present invention will become apparent to those skilled in the art when the following description of the best mode contemplated for practicing the invention is read in conjunction with the accompanying drawings.

### BRIEF DESCRIPTION OF THE DRAWINGS

The description herein makes reference to the accompanying drawings wherein like reference numerals refer to like workpieces throughout the several views, and wherein:

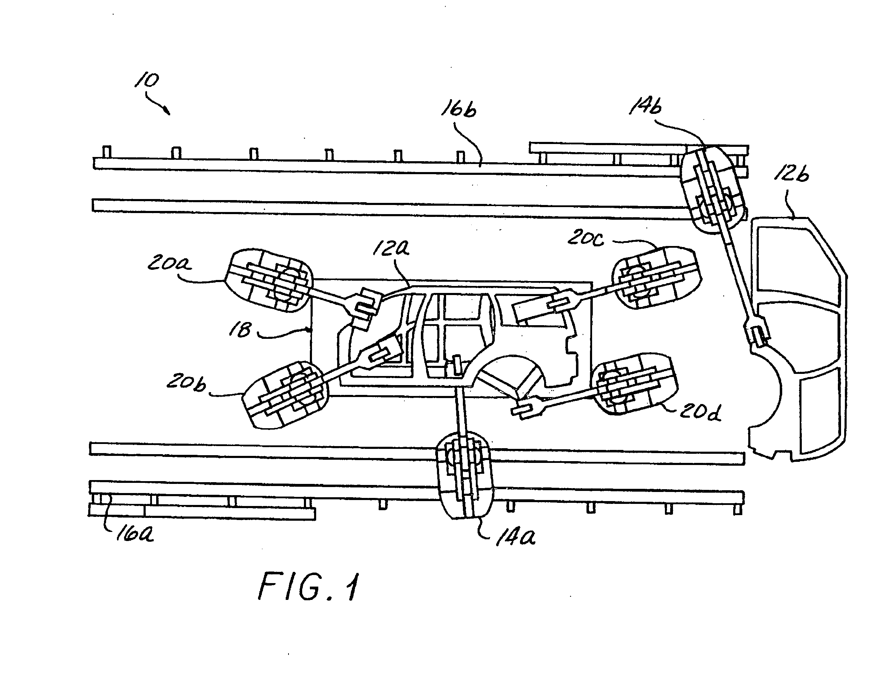

Figure 1 is an overhead view of a workstation according to the present invention;

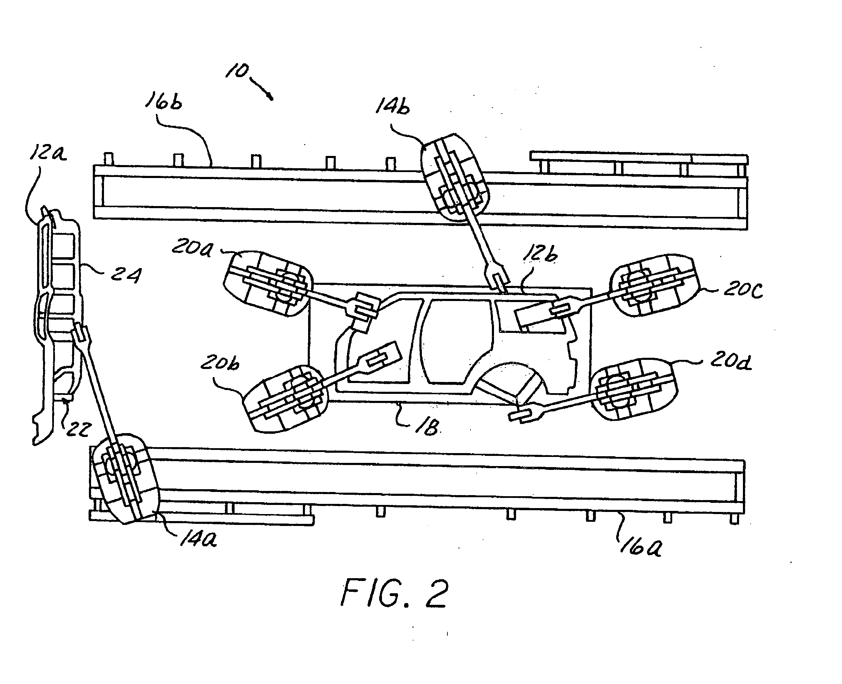

Figure 2 is a simplified perspective view of the workstation according to the present invention with a first material handling robot at a loading position, a second material handling robot at a processing position, and material processing robots located adjacent the processing position in between the first and second processing paths followed by the first and second material handling robots; and

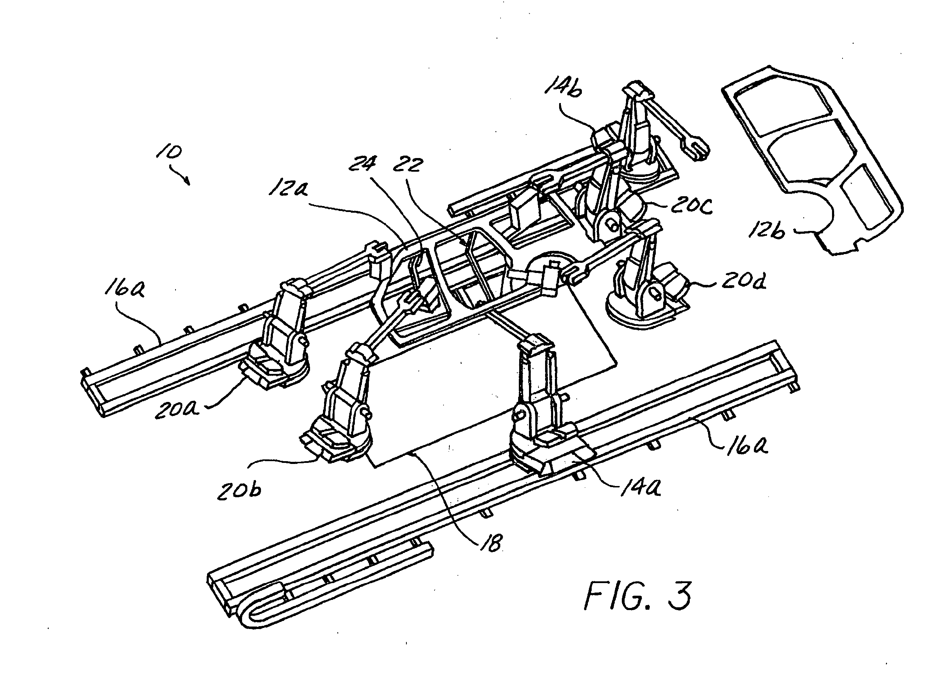

Figure 3 is a simplified perspective view of the workstation according to the present invention with the first material handling robot moved into the processing position, the second material handling robot moved to the unloading position, and the material processing robot located adjacent the processing position in between the first and second processing paths.

### DESCRIPTION OF THE PREFERRED EMBODIMENT

Referring now to Figures1-3, the present invention includes a flexible body workstation 10 for assembling workpieces 12. The workstation 10 can include at least one material handling robot 14a, 14b movable along a processing path 16a, 16b for supporting a workpiece 12 to be moved along the processing path 16a, 16b. The workstation can include at least one station defined by at least one processing position adjacent the processing path 16a, 16b for receiving workpieces 12 to be processed when delivered and positioned by the at least one material handling robot 14a, 14b. A stationary monument 18 can be provided if desired, for large workpieces to be processed.

By way of example and not limitation, at least one material handling robot can include a first material handling robot 14a movable along a first processing path 16a for supporting a first workpiece 12a to be moved along the first processing path 16a, and a second material handling robot 14b movable along a second processing path 16b for supporting a second workpiece 12b to be moved along the second processing path 16b. At least one stationary monument 18 can be provided, if desired for large workpieces, and can include a first stationary monument defining the processing position located between the first and second processing paths 16a, 16b. The at least one material handling robot 16a, 16b can be supported for movement along at least one overhead rail location and/or at least one floor supported rail location.

At least one material processing robot 20a, 20b, 20c, 20d can be located adjacent the processing position for processing workpieces 12a, 12b to be processed after being delivered by the at least one material handling robot 14a, 14b traveling along the corresponding processing paths 16a, 16b. Each material handling robot 14a, 14b can include an interchangeable end effecter 22 connectible to the material handling robot 14a, 14b for holding and supporting different configurations of workpieces 12a, 12b. The interchangeable end effecter 22 can be provided for holding, supporting, locating and/or geometry fixturing the corresponding workpiece 12a, 12b to be processed with the corresponding material handling robot 14a, 14b at the processing position 18. The interchangeable end effecter 22 can be floor mountable by the corresponding material handling robot 14a, 14b at the processing position. The interchangeable end effecter can define a geometry fixture tool 24 for accurately positioning the workpiece 12a, 12b to be processed with respect to the end effecter 22 thereby allowing the corresponding material handling robot 14a, 14b to accurately position the workpiece 12a, 12b and end effecter 22 in combination at the processing position in a predetermined location so that the material processing robots 20a, 20b, 20c, 20d can perform the processing operations with precise accurate positioning with respect to the workpiece. By way of example and not limitation, the material processing robots 20a, 20b, 20c, 20d can include welding robots for processing workpieces 12a, 12b of different configurations or body styles of automobiles to be assembled along the assembly line. The material processing robot 20a, 20b, 20c, 20d, can be supported from at least one overhead position and/or supported from at least one floor position.

The present invention can include a method for processing a plurality of workpieces 12a, 12b. The method can include the steps of supporting a workpiece 12a, 12b to be moved along a processing path 16a, 16b with at least one material handling robot 14a, 14b movable along the processing path 16a, 16b. The method can include the step of receiving workpieces 12a, 12b to be processed that are delivered by the at least one material handling robot 14a, 14b at at least one station defined by at least one processing position adjacent the processing path 16a, 16b. A stationary monument 18 can be provided, if desired, for example to support a large workpiece for processing.

By way of example and not limitation, the method according to the present invention can include the step of supporting a first workpiece movable along the first processing path 16a with a first material handling robot 14a, and supporting a second workpiece 12b to be moved along a second processing path 16b with a second material handling robot 14b movable along the second processing path 16b. The first workpiece 12a or second workpiece 12b can be supported for processing after being delivered by one of either the first and second material handling robots 14a, 14b at at least one station located between the first and second processing paths 16a, 16b. The method according to the present invention can include the step of processing the first and second workpieces 12a, 12b to be processed after being delivered by one of either the first and second material handling robots 14a, 14b with at least one material processing robot 20, 20b, 20c, 20d located adjacent the processing position. By way of example and not limitation, the at least one material processing robot 20a, 20b, 20c, 20d can include a welding robot.

The method according to the present invention can include the step of holding and supporting different configurations of workpieces 12a, 12b with interchangeable end effecters 22 connectible to the first and second material handling robots 14a, 14b. Different workpiece configurations can be held, supported, transported, and accurately located with the interchangeable end effecters 22 and the corresponding material handling robots 14a, 14b at the processing position. The method according to the present invention can include the step of mounting one of the interchangeable end effecters 22 with respect to the processing position with the corresponding material handling robot 14a, 14b. If desired, the corresponding material handling robot can be disengaged from the end effecter 22 at the processing position, allowing the corresponding material handling robot to engage a processing tool, by way of example and not limitation, such as a weld gun, for performing additional processing operations on the workpiece to be processed located at the processing position. The method according to the present invention can include the step of accurately positioning the workpieces 12a, 12b to be processed with a respect to the end effecter 22 with a geometry fixture tool 24 incorporated into the interchangeable end effecter 22. The combination of the workpiece 12a, 12b held with the geometry fixture tool 24 incorporated into the interchangeable end effecter 22 can be accurately positioned at the processing position with the corresponding material handling robot 14a, 14b allowing precise operations to be performed by the material processing robots 20, 20b, 20c, 20d.

When material handling robot 14a is in the processing position, the material processing robots 20a, 20b, 20c, 20d can begin the processing operations on the workpiece. If desired, the material handling robot 14a can disengage the end effecter 22 and pick up a processing tool for additional processing on the workpiece at the processing position. Simultaneously, the second material handling robot 14b can unload the carried workpiece at the unload or transfer position located at one end of the processing path 16b and return to the opposite end of the processing path 16b to a load or transfer position in order to carry a new unprocessed part to the processing position. An operator, or other automated equipment, can load the end effecter. The second material handling robot 14b can have exchanged end effecters, if necessary, in order to process a different configuration part from the workpiece previously carried along the second processing path 16b. After being loaded, the second material handling robot 14b goes to pounce and is ready to position parts for processing after the first material handling robot 14a is complete and clear from the processing position. Material handling robots 14a, 14b can alternatively hold a geometry fixture end effecter for precisely locating the workpiece with respect to the material processing robots 20a, 20b,20c,20d. By way of example and not limitation, the material processing robots 20a, 20b, 20c, 20d can be welding robots. High weld efficiencies, i.e. welding 34 out of 40 seconds, can be provided with a configuration as disclosed in the present invention. Station monuments can be used to locate the geometry fixture end effecter from both material handling robots 14a, 14b, if desired for processing large workpieces.

The method of operation according to the present invention can include the following sequence. The material handling robot 14a can retrieve an end effecter tool for the particular model or configuration of workpiece to be processed or welded. The material handling robot 14a can move to the load position and can present the retrieved end effecter to an operator or other automated equipment for loading. The material handling robot 14a can move to a processing position or weld position, locating the retrieved end effecter tool with respect to a station with precise positioning for processing or welding. If required, the material handling robot 14a can disengage from the end effecter and pick up a processing tool such as a weld gun for additional processing to be performed on the workpiece, such as welding. The material handling robot 14a after the processing is complete can move to an unload station and can present the workpiece to an operator or other automated equipment, such as a downstream robot at the next workstation to unload. Storage bins can be provided for various configurations of end effecters for processing various configurations of workpieces along the processing paths. While material handling robot 14a is located at the processing position, material handling robot 14b can unload a completed processed workpiece, such as a complete welded part, can change end effecter for the next workpiece to be processed or part to be welded, and can be moved to the load station to present the retrieved end effecter to an operator or other automated equipment for loading. The material handling robot 14b then goes to pounce at the processing position after the material handling robot 14a is completely clear of the processing position.

While the invention has been described in connection with what is presently considered to be the most practical and preferred embodiment, it is to be understood that the invention is not to be limited to the disclosed embodiments but, on the contrary, is intended to cover various modifications and equivalent arrangements included within the spirit and scope of the appended claims, which scope is to be accorded the broadest interpretation so as to encompass all such modifications and equivalent structures as is permitted under the law.

## Claims

1. A workstation for processing a plurality of workpieces comprising:
at least one material handling robot movable along a processing path for supporting a workpiece to be moved along the processing path; and
at least one station defined by at least one processing position adjacent the processing path for receiving workpieces to be processed when delivered and positioned by the at least one material handling robot.

2. The workstation of claim 1, wherein the at least one material handling robot further comprises:
a first material handling robot movable along a first processing path for supporting a first workpiece to be moved along the first processing path; and
a second material handling robot movable along a second processing path for supporting a second workpiece to be moved along the second processing path.

3. The workstation of claim 2, wherein the at least one station further comprises:
a first station monument defining the processing position located between the first and second processing paths for supporting a workpiece to be processed delivered by one of either the first and second material handling robot.

4. The workstation of claim 1 further comprising:
at least one material processing robot located adjacent the processing position for processing workpieces to be processed after being delivered by the first material handling robot.

5. The workstation of claim 1 further comprising:
interchangeable end effecters connectible to the first material handling robot for holding and supporting different workpiece configurations.

6. The workstation of claim 5 further comprising:
the interchangeable end effecters for locating the workpieces to be processed with the corresponding material handling robot at the processing position.

7. The workstation of claim 5 further comprising:
the corresponding material handling robot disengageable from the end effecter at the processing position, allowing engagement with a material processing tool for performing additional processing operations on the workpiece to be processed located at the processing position.

8. The workstation of claim 5 further comprising:
the interchangeable end effecters being floor mountable by the corresponding material handling robot at the processing position.

9. The workstation of claim 5 further comprising:
a geometry fixture tool incorporated into the interchangeable end effecters for accurately positioning the workpieces to be processed with respect to the end effecter and allowing the corresponding material handling robot to accurately position the workpiece and end effecter combination at the processing position.

10. A method for processing a plurality of workpieces comprising the steps of:
supporting a workpiece to be moved along a processing path with at least one material handling robot movable along the processing path; and
receiving workpieces to be processed when delivered and positioned by the at least one material handling robot with respect to at least one station defined by at least one processing position adjacent the processing path.

11. The method of claim 10 further comprising the step of:
supporting a first workpiece to be moved along a first processing path with a first material handling robot; and
supporting a second workpiece to be moved along a second processing path with a second material handling robot movable along the second processing path.

12. The method of claim 11 further comprising the step of:
supporting a workpiece to be processed delivered by one of either the first and second material handling robots with at least one station monument located between the first and second processing paths.

13. The method of claim 11 further comprising the step of:
processing workpieces to be processed after being delivered by one of either the first and second material handling robots with at least one material processing robot located adjacent the processing position.

14. The method of claim 11 further comprising the step of:
holding and supporting different workpiece configurations with interchangeable end effecters connectible to the first and second material handling robots.

15. The method of claim 14 further comprising the step of:
locating different workpiece configurations with the interchangeable end effecters and the corresponding material handling robots at the processing position.

16. The method of claim 14 further comprising the step of:
mounting one of the interchangeable end effecters with respect to the at least one station defined by the at least one processing position with the corresponding material handling robot.

17. The method of claim 14 further comprising the step of:
disengaging the corresponding material handling robot from the end effecter at the processing position.

18. The method of claim 17 further comprising the step of:
engaging the corresponding material handling robot with a material processing tool for performing additional processing on the workpiece to be processed located at the processing position.

19. The method of claim 14 further comprising the step of:
accurately positioning the workpieces to be processed with respect to the end effecter with a geometry fixture tool incorporated into the interchangeable end effecters.

20. The method of claim 19 further comprising the step of:
accurately positioning the workpiece and end effecter combination at the processing position with the corresponding material handling robot.
